# EUROPÄISCHE PATENTSCHRIFT

(11) **EP 2 406 183 B1**
(45) Veröffentlichungstag und Bekanntmachung des Hinweises auf die Patenterteilung: **06.05.2015**
(21) Anmeldenummer: 10714570.8
(22) Anmeldetag: 10.03.2010
(51) Int. Cl.: D21C 9/16, C01B 33/32, D21C 5/02, D21C 9/10

(54) **VERFAHREN ZUR BEREITSTELLUNG VON WASSERGLAS FÜR EINE INDUSTRIELLE ANWENDUNG**
METHOD FOR PROVIDING WATER GLASS FOR AN INDUSTRIAL APPLICATION
PROCÉDÉ DE PRÉPARATION DE VERRE SOLUBLE POUR UNE APPLICATION INDUSTRIELLE

(30) Priorität: 12.03.2009 DE 102009012468
(43) Veröffentlichungstag der Anmeldung: 18.01.2012
(73) Patentinhaber: HWT-wassertechnische Anlage GmbH, 64390 Erzhausen (DE)
(72) Erfinder: SCORDIALO, Angelo, 64380 Erzhausen (DE)
(74) Vertreter: Walkenhorst, Andreas
(86) Internationale Anmeldenummer: PCT/EP2010/001498
(87) Internationale Veröffentlichungsnummer: WO 2010/102803

(56) Entgegenhaltungen:
- WO-A1-01/44108
- GB-A- 790 286
- US-A- 4 347 099
- US-A- 4 909 900
- US-B1- 6 179 957
- US-B1- 6 251 220

## Beschreibung

Die Erfindung betrifft ein Verfahren zur zur Bereitstellung von Wasserglas für eine industrielle Anwendung. Sie betrifft weiter die Verwendung des bereitgestellten Wasserglases.

Üblicherweise kommen sogenannte Wassergläser (Natrium- und Kaliumeilicatgläser) bei vielerlei Anwendungen und Prozessen zum Einsatz Unter anderem werden diese auch in der Papierindustrie beim Deinkingprozess von Altpapieren und bei der Faserbleiche (Holzschliff, TMP. Altpapier usw.) eingesetzt. Dabei kommen je nach Anwendung sogenannte modifizierte Wassergläser zum Einsatz.

Modifiziert wird dabei durch den Hersteller zum einen beim Schmelzverfahren das dabei entstehende Standardwasserglas (auch Stückenglas genannt), welches ein auch als Silicatmodul bezeichnetes Si02/Na20-VErhältnis von ca. 3,2 - 3,4 hat, durch spätere Zugabe von Natronlauge oder bei hydrothermalen Aufschluss gleich direkt durch Erhöhung des Natronlaugenanteiles. Dadurch kann das Modul beliebig variiert bzw. verringert werden. Die so modifizierten Wassergläser kommen dann aufgrund Lagerung und Transport erst nach mehreren Tagen oder Wochen zum Einsatz und erfahren daher einen gewissen nachteiligen Alterungseffekt (Verschlechterung der Produkteigenschaften).

Aus der GB 790 286A ist ein Prozeß für die Herstellung von Alkalisilikaten bekannt, in dem eine Wasserglaslösung mit einem Silikatmodul von 3 durch die Verdünnung eines Natriumsilikats mit Natronlauge bereitgestellt wird. Die US 4,347,099 offenbart das Bleichen von Altpapier mit einer Mischung aus Wasserstoffperoxid, Natriumsilikat, Natronlauge und einem Polymer, das Carboxylgruppen enhält.

Der Erfindung liegt nunmehr die Aufgabe zugrunde, ein Verfahren zur Bereitstellung von Wasserglas für eine industrielle Anwendung anzugeben, mit dem besonders bedarfsgerecht ein für den jeweiligen Anwendungszweck geeignetes Wasserglas besonders ressourcenschonend bereitgestellt werden kann. Des weiteren soll eine besonders günstige Verwendung des bereitgestellten Wasserglases angegeben werden.

Diese Aufgabe wird erfindungsgemäß gelöst, mit dem Merkmalen des Anspruchs 1 und bezüglich der Verwendung mit dem Merkmalen des Anspruchs 6.

Das auch als Silikatmodul bezeichnete SiO2/Na20- bzw. SiO2/K2O-Verhältnis kann dabei als Gewichts- oder auch als Molverhältnis zugrundegelegt und ausgewertet werden, wobei zur Umrechnung das Molverhältnis für Natriumsilikat aus dem 1,031-fachen des Gewichtsverhältnisses und für Kaliumsilikat aus dem 1,563-fachen des Gewichtsverhältnisses erhältlich ist. Die nachfolgenden Zahlenangaben spezifizieren Gewichtsverhältnisse soweit nicht anders angegeben.

Bei Laborversuchen zur grundsätzlichen Kostenreduzierung über die eigene VorOrt-Herstellung von Modifikationen von Wassergläsern aus Standardwasserglas wurde überraschend gefunden, dass die selbst gefertigten Wasserglasmodifikationen gegenüber den Handelsmodifikationen bei jeweils gleichen SiO₂/Na₂0 und/oder iSO2/ K2O-Modulen und gleichen Einsatzmengen durch Ausbildung und Nutzung intermediärer Wasserglasmodifikationen deutliche Vorteile aufwiesen, wenn diese entsprechend umgehend zum Einsatz kamen:
Vorteile Deinking und Bleiche
   - höhere Weißen und Hellbezugswerte durch erhöhten Farbaustrag
   - gleichzeitig Erhöhung der Ausbeute
   - geringere Faservergilbung bei gegenüber den Handelsmodifikationen konstantem pH-Wert
   - Reduzierung der zusätzlich benötigten Natronlaugenmenge bei Bleiche und Deinking bei gleichem resultierendem pH-Wert
   - geringere Viskosität der Faserstoffsuspension bei gleichem pH-Wert (Entwässerungsverbesserung)
   - Verbesserte Flexodruckpartikelentfernung
   - Reduzierung der H2O2-Menge bei der Bleiche, da eine verbesserte Komplexierung von H2O2-zersetzenden Schwermetallen und Prozessstabilisierung erreicht wird (Erhöhung Restperoxid)
   - dadurch werden weniger anionisch aktive Substanzen ("anionic trash") sowie CSB freigesetzt, was zu einer weiteren Entlastung des Systems und damit eine Verringerung von chemischen Additiven führt
   - geringere Ablagerungsneigung (vor allem Calciumablagerungen) in den Bleichvorrichtungen und Rohrleitungen

Bei weiteren Tests, die eigentlich zur Verbesserung der Schlammentwässerung dienen sollten, wurde zudem zufällig gefunden, dass eine Einbindung von zusätzlichen organischen Polymeren, die zur weitergehenden Ausbeuteerhöhung dosiert werden, die insitu-Wasserglasmodifikation außerdem verbessert und deren Wirkung überdies verstärkt wird. Dadurch konnte nicht nur die Entwässerung positiv beeinflusst werden, sondern noch weitergehend der Effekt des VorOrt-modifizierten Wasserglases. Damit kommt zur Wirkungssteigerung durch intermediäre Wasserglasmodifikationen noch eine weitere Verbesserung durch in das insitu-Wasserglas eingebundenes Polymer zustande. Art und Menge der dabei vorteilhafterweise eingesetzten Polymere entsprechen dabei den in der DE 102 15 620 A1 entnehmbaren Angaben. Die Offenbarung der DE 102 15 620 A1 wird diesbezüglich ausdrücklich einbezogen ("incorporation by reference").

Die intermediären Modifikationen wurden hergestellt, indem ausgehend von einem Stückenglas mit einem Modul von 3,25 durch stöchiometrische Zugabe von Natronlauge das jeweilig benötige Modul eingestellt wurde. Die Wasserglasmodifikationen kamen nach Minuten bis einigen Stunden anstelle der Standard-Lieferantenmodifikation zum Einsatz. Mit dem Verfahren der VorOrt-Modifikation können so beliebige Module mit beliebigen Reifezeiten und/oder Natrium/ Kalium-Anteilen eingestellt werden und einzeln oder auch als Mischungen untereinander eingesetzt werden.

Neben der grundsätzlich kostengünstigeren Variante der Eigenmodifikation war somit eine Basis für weitere Kostenreduzierungen durch Verringerung der Natronlaugen- und H2O2-mengen gefunden sowie chemische-mechanische Vorteile (Verluste / Druckfarbenelimination / Weißesteigerungen) gefunden, welche dann in verschiedenen Praxisversuchen verifiziert werden konnten.

Die chemischen Hintergründe für die, gegenüber den handelsüblichen "gealterten" Wasserglasmodifikationen, verbesserte Reaktion der der vor Ort modifizierten Wassergläser wird auf die Bildung von intermediären Übergangswassergläsern zurückgeführt:
So konnte anhand von ²⁹Si-NMR-Analysen eine Verschiebung der sogenannten Q₀-Q_{4/n}-Phasen nachgewiesen werden (Definition der Q-Phasen: siehe bekannte Literatur namhafter Wasserglashersteller; z.B. PQ Europe: "Natrium und Kalium Silikate", Okt.2003 oder G. Engelhardt et al:, "Z. Anorg. Chemie", 4288, 1975: "Qualitative Interpretationen des Gleichgewichtes bei Silikat-Anionstrukturen").

Normalerweise weist ein modifiziertes Produkt gegenüber dem Standardwasserglas einen erhöhten Anteil an Q0 bis Q2 (monomere bis trimere lineare Silikate) aber verringerten Anteil an verzweigten und cyclischen Silikaten auf. Das VorOrt-modifizierte Produkt weist ind den meisten Fällen einen erhöhten Anteil an Q1 sowie einen erhöhten Anteil an Q3/4/n aber einen geringeren Anteil an Q2/Q3 auf. Dies hat den Vorteil, dass durch die kurzkettigen Anteile ein besserer Dispergier- sowie Ablösungseffekt eintritt bei gleichzeitigen Vorteilen durch die verzweigten und cyclischen Anteile hinsichtlich Molekularsieb- und Komplexierungseffekten (Q3/4/n). Es werden sozusagen die Vorteile des Standardwasserglases sowie die des modifizierten Wasserglases unter weitgehender Ausschaltung der Nachteile der linearen Q2-Ketten (Ablagerungen, Erhöhung der Verluste, Viskosität usw.) genutzt. Es entsteht gewissermaßen ein intermediäres Breitbandwasserglas. Dies bedeutet eine schnellere Wirkung bei geringerem Verbrauch als dies mit gealterten Wassergläsern der Fall ist.

Eine Möglichkeit zur Strukturbestimmung der Silicate ist die 29Si-NMR. Dabei werden die Strukturgruppen über die chemische Verschiebung bestimmt, die jeweiligen Peaks integriert und in Relation gesetzt. Die Tabelle zeigt die Veränderung der Strukturgruppen Q0 - Q4 bei den jeweiligen Modifikationen (Hersteller und VorOrt):

| **29Si-NMR** | | | | | |
|---|---|---|---|---|---|
| **Wasserglas** | Standard | Modifikation | Vor-Ort-Modifikation | Modifikation | Vor-Ort-Modifikation |
| Gruppenbe Zeichnung | M = 3,25 pH= 12,2 | M = 2,4 pH= 13,2 | M = 2,4 pH= 13,2 | M=1,6 pH= 138 | M = 1,6 pH= 13,8 |
| **Q0** | **<1,0%** | **1,80%** | **0,50%** | **6,60%** | **4,60%** |
| **Q1** | **4,60%** | **7,20%** | **9,20%** | **24,80%** | **32,40%** |
| **Q2** | **<1,0%** | **2,30%** | **1,00%** | **11,50%** | **4,90%** |
| **Q2Q/3** | **27,00%** | **38%** | **32,10%** | **41,70%** | **36,10%** |
| **Q3** | **55,60%** | **45,20%** | **49,40%** | **15,40%** | **17,80%** |
| **Q4** | **12,50%** | **6%** | **7,80%** | **0%** | **4,20%** |

Durch Alterung der VorOrt-Modifikationen stellt sich dann nach mehreren Stunden bis Tagen (ca. 120h) wieder das durch G. Engelhardt beschriebene Gleichgewicht ein, welches auch bei den Handelsmodifikationen vorliegt. Aus diesem Grund werden die Ansätze der VorOrt-Modifikationen mit Durchlaufzeiten zwischen 10 sec und 120h gewählt. Bei den Versuchen haben sich Zeiten zwischen 10 - 360min zumeist als optimal herausgestellt. Die Zeiten sind jedoch abhängig von der jeweiligen Anwendung und deren Optimum ist für jeden Einzelfall extra zu ermitteln. Mischungen verschiedener Module und/ oder verschiedener Reifezeiten sind ebenfalls möglich. Auch Mischungen mit gealterten Modifikationen oder Standardwassergläsern können dargestellt werden. Damit ergeben sich Freiheitsgrade verschiedene Ladungsdichten (offene Ladungsträger) und aktive Reaktionsoberflächen nebeneinander darzustellen, die über die Anwendung von (gealterten) handelsüblichen Wassergläsern und deren Modifikationen bislang nicht möglich waren.

Diese intermediäre offenpolymere Darstellung der modifizierten Wassergläser erlaubt zudem auch gegenüber den kürzeren Q2-Ketten aufgrund der reaktiven Oberflächen und Ladungsdichten eine nachhaltige Verbesserung der Einbindung organischer Polymere in das modifizierte Wasserglas, was noch zusätzlich die Funktionen des Wasserglases unterstützen bzw. verbessern kann.

Dadurch ergeben sich prinzipiell zwei grundsätzliche Ansatzmöglichkeiten für die Nutzung von VorOrt-modifizierten Wassergläsern, wobei auch Mischformen zum Einsatz kommen können:
Möglichkeit A: Leistungssteigerung durch VorOrt-Modifikation bei gleichen Einsatzmengen für die vorliegende Anwendung und gleichzeitiger Kostenreduzierung oder
Möglichkeit B: doppelter Kosteneinsparungseffekt durch VorOrt-Modifikation bei gleicher Leistung.
Hierbei sind immer noch weitere Optimierungen mit Polymeren möglich.

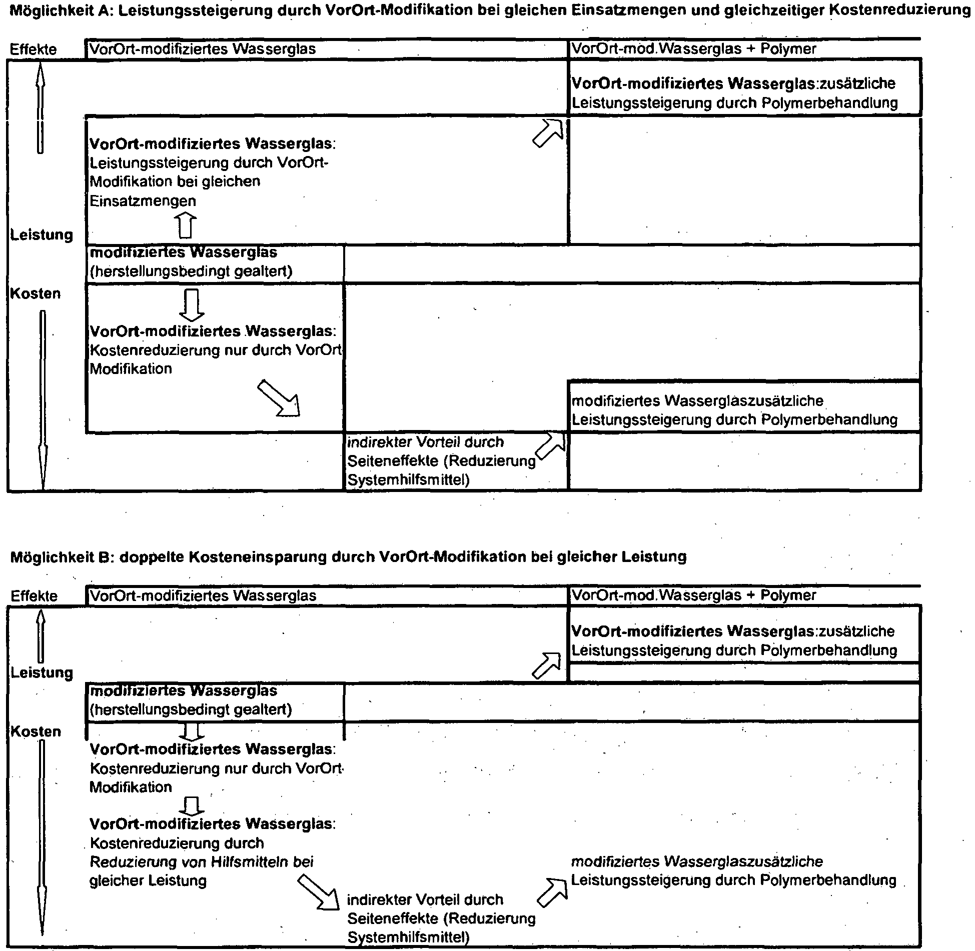

Beschreibung der Herstellung von VorOrt-modifizierten Wassergläsern:
Die Herstellung von VorOrt-modifizierten Wassergläsern erfolgt durch einfaches Vermischen von Standardwasserglas (z.B. Standardwasserglas 38/40: Modul 3,2 - 3,4) oder weitergehende Vermischung von bereits modifiziertem Wasserglas mit Natronlauge beliebiger Konzentration, wodurch dann stöchiometrisch das gewünschte geringere SiO2/Na2O-Modul eingestellt wird. Berücksichtigt werden dabei die SiO2 und Na2O-Anteile aus dem vorliegenden Wasserglas sowie die Na2O-Anteile aus der Natronlauge. Alternativ kann anstelle der Natronlauge auch Kalilauge und oder ein Kalium-Wasserglas oder Kalium/Natrium-Wasserglas verwendet werden. Die mengengerichtete Vermischung kann entweder durch handelsübliche Mischaggregate (z.B. Statikmischer) oder auch durch direkte Vermengung in einem Mischbehälter mit Rührer erfolgen. Je nach benötigter Reaktions- bzw. Reifezeit der Modifikation werden entsprechende Vorlagebehälter für eine Zwischenlagerung notwendig. Die Dosierung erfolgt dann nach eingestellter zeitlicher Vorgabe, wobei auch Mischungen verschiedener Wassergläser mit unterschiedlichen Modulen und Reifezeiten sowie Alkalizusätzen möglich sind. Die Integration von funktionellen Polymeren während der Herstellung kann die Leistung des Wasserglases zusätzlich erhöhen, wobei der insitu-Einbau des Polymers effektiver ist als die nachträgliche Integration.

Typische Anwendungen sind:
Flotationsdeinking
Oxidative Bleiche von Holzschliff, TMP, C-TMP und Altpapier (einfach- und doppeltflotiert)
Oxidative Bleiche von Zellstoff
Oxidative Bleiche von alternativen Fasern
Kartonleimung
Hülsenwicklung

Die Anwendung ist aber prinzipiell auf alle anderen Anwendungen von Silikaten übertragbar, wie sie in allen gängigen Broschüren der Wasserglashersteller beschrieben sind, z.B. Natrium und Kalium-Silikate- Verbindungen für vielseitige Anwendungen, PQ Europe, Oktober 2003.

### Beispiel 1 Laborversuche Deinking

Im Labor wurde eine Altpapiermischung aus 50% Zeitungen, 30% SC-Zeitschriften und 20% LWC-Zeitschriften, die eine typische Zusammensetzung von Deinkingware darstellen soll, einer standardisierten Zerfaserung (Stoffkonzentration 15%, 45°C, 20min) unterzogen. Diesem Papierauflösungsprozess wurden 0,3% 100%ige NaOH, 0,45% Seife und 0,8% H2O2 (100%ig) zugegeben. Die Zugabe von Wasserglas betrug 1,0%. Als Wasserglas wurde in den jeweiligen Versuchsreihen ein modifiziertes Wasserglas mit einer SiO2/Na2O-Ratio von 1,87, einem pH-Wert von 12,9 und einer Dichte von 1,51g/cm³ eingesetzt. Verwendet wurden eine Standardherstellermodifikation 1,87, sowie VorOrt-Modifikationen 1,87, die aus einem Standardwasserglas mit einem Modul von 3,25 durch stöchiometrische Zugabe einer 75%igen NaOH hergestellt wurden. Die Ansätze für die Modifikationen erfolgten in einem Becherglas unter moderatem Rühren mit ca. 60 U/min. Es wurden Reifezeiten von 15 Minuten, 1,3, 12 und 24 Stunden für die VorOrt-Modifikationen eingesteiit. Die Konzentrationen von 27,8% SiO2 und 14,9% Na20 wurden zur Plausibilität der Ansätze überprüft.

Nach der Zerfaserung wurde der Stoffbrei einer Voith Delta 25- Laborzelle zur Flotation bei einer Stoffkonzentration von 0,8% zugegeben. Die Analysen erfolgten jeweils nach 8 und 12 Minuten.

Die Weiße bzw. die Farbwerte wurden bei allen Beispielen entsprechend CIE ISO 2470 R457 und DIN 5033/5036, der Hellbezugswert Y mit dem Elrepho (DataColor) 2000/ D65/10°) gemessen. Die Schmutzpunktbestimmung erfolgte jeweils mit einem DOT-Counter 2.0. Die Bestimmung der Verluste erfolgt über eine Mengendifferenzanalyse. Die Asche wird bei 425°C bestimmt.

Ausgehend von einem Weißegehalt von 41,8% konnten bei den Versuchen Weißen von 59,3 % für die gealterte Modifikation eines Wasserglasherstellers (Standardlieferung eines modifizierten Wasserglases 1,87) bzw. 59,9 - 60,8% bei Verwendung von VorOrt-modifizierten Wassergläsern unterschiedlicher Reifezeit erreicht werden.

Bei einem ausgehenden Hellbezugswert von Y = 45,9% wurden Endhellbezugswerte von 62,6 % (Herstellermodifikation) bzw. 63,0- 63,8% (VorOrt-modifiziert) erreicht.
Damit ergibt sich bei optimierter Reifezeit nach 12 Minuten eine Steigerung um bis zu 1,5% Weiße oder 1,2 Hellbezugswerte bei Verwendung eines VorOrt-modifizierten Wasserglases anstelle eines herstellerseitig modifizierten Standardwasserglases bei gleichzeitig geringeren Verlustraten und weniger Vergilbung. Letzteres deutet auf eine höhere Aktivierung des Wasserstoffperoxids hin.

Vorteile ergaben sich auch hinsichtlich der Schmutzpunktfläche entsprechend einem besseren Austrag von Farbpartikeln. Die Ergebnisse sind exemplarisch für eine Flotationszeit von 12 Minuten in der folgenden Tabelle dargestellt:

| Delta25 | Standard Mod. | VorOrt-Modifikationen | | | | |
|---|---|---|---|---|---|---|
| nach 12 Minuten | Std >120 Stunden | 15min | 1 Stunde | 3 Stunden | 12 Stunden | 24 Stunden |
| Weiße R457 % | 59,3 | 60,8 | 60,4 | 60,3 | 60 | 59,9 |
| Hellbez. Y % | 62,6 | 63,8 | 63,4 | 63,4 | 63,1 | 63 |
| b*-Wert - | 4,9 | 3,2 | 3,8 | 4 | 3,8 | 4,1 |
| Stoffverlust % | 19,8 | 18,2 | 19 | 19,6 | 19,4 | 19,6 |
| Asche % | 22,2 | 24,2 | 23,9 | 24 | 22,8 | 23 |
| Schmutzpunktfläche mm²/m² | 559 | 443 | 391 | 555 | 529 | 582 |

Das herstellerseitig modifizierte Wasserglas (hier bezeichnet als: Std>120 Stunden) hatte bei der Entnahme aus dem Tank eine Lagerzeit von mindestens 120 Stunden.
Bei Wiederholungsversuchen konnten die ermittelten Unterschiede auf vergleichbaren Niveaus bestätigt werden. Unterschiede ergaben sich bei verschiedenen Altpapiersorten hinsichtlich der optimalen Länge der Reifezeit. Tendenziell zeigt sich allgemein, dass für höhere Aschegehalte niedrigere, für niedrigere Aschegehalte im Altpapier höhere Reifezeiten notwendig sind.

### Beispiel 2 Papierfabrik mit Altpapierdeinking

In einer Altpapieranlage mit zwei parallelen nahezu baugleichen zweistufigen Deinkingsträngen wurden gleichlaufend Versuche durchgeführt, wobei neben den Standardadditiven ein Strang mit herstellerseitig modifiziertem Wasserglas (Modul 1,85) und der andere Strang mit einem jeweils von 3,4 auf 1,85 VorOrt-modifiziertem Wasserglas behandelt wurde. Zeitweise wurden die Wassergläser beider Stränge zusätzlich mit Polymer behandelt. Zum Deinking kam eine Mischung aus ca. 35% Zeitungen und 65% Illustrierten. Zur Trommelzerfaserung wurden folgende Additivmengen zugesetzt: H2O2 (100%): 0,9%; NaOH (100%): 0,35%; Seife 0,35%; Wasserglas 1,85: 1,25%; teilweise 50ppm Polymer (auf Wasserglas bezogen).

In Laborvorversuchen wurde für diese Anwendung Reifezeiten von 1-3 Stunden als optimal nachgewiesen. Aufgrund der örtlichen Gegebenheiten konnte für die Versuche vor Ort nur ein 1 und 2 Stunden gereiftes Produkt gewählt werden. Alle Versuchsergebnisse sind Mittelwerte über jeweils 8 Tage Versuchsdauer.

Die Ergebnisse zeigten für beide VorOrt-modifizierten Produkte ausgehend von einer Eingangsweiße von 48% in der Ableerbütte einen Weißevorteil des Fertigstoffes von jeweils ca. 0,8 - 1% bzw. einen Anstieg im Mittel über zwei Tage von 61,7 auf 62,5-62,7% im parallelen Lauf. Der Gelbwert b* ist von 5,2 auf 4,4 gefallen, damit geht weniger Vergilbung einher. Die Schmutzpunktfläche (gemessen an Laborblätter) verringerte sich um ca. 20% auf 256mm²/m². Die Ausbeute konnte von 82,5 auf 83% gesteigert werden. Die Ergebnisse der 1 und 2-Stunden Modifikation unterschieden sich bei den Versuchen nur unwesentlich, so dass alle weiteren Versuche nur noch mit der 1-Stunden-Umformung durchgeführt wurden. Für einen halben Tag wurde speziell gesammeltes Flexodruckmaterial eingesetzt und parallel aufgegeben. Überraschenderweise ist die Filtratverdunklung (nach Ingede-Methode 3: optische Bewertung von Deinkingfiltraten) während der Zeit des Einsatzes von wasserbasierenden Flexodruckerzeugnissen von dY= 45 auf ca.31 % im Strang mit VorOrt-modifiziertem Wasserglas gefallen, was auf einen gesteigerten Austrag von Flexodruckpartikeln hinweist. Bei Zusatz von 50ppm Polymer (auf Wasserglasmenge bezogen) konnte dieser Anteil noch zusätzlich auf 17% reduziert werden.

Aufgrund der Ergebnisse wurde eine Reduzierung der Additive durchgeführt mit dem Ziel gleicher Ergebnisse in beiden Strängen.

Hierbei wurde gefunden, dass neben der über die VorOrt-Modifikation gegenüber der im Handel erhältlichen Wasserglasmodifikation grundsätzlichen Kosteneinsparung von ca. 20-40% (je nach gewünschtem Modul) zusätzlich noch Kostenreduzierungen von ca. 10 - 15% über die Einsparung von Additiven dargestellt werden können, ohne an Leistung in der Deinkinglinie zu verlieren.

Sukzessive wurde das VorOrt-modifizierte Wasserglas von 1,25 auf 1,05%, das H2O2 von 0,9 auf 0,7% sowie die Natronlauge von 0,35 auf 0,25% verringert bis sich wieder gleiche Zielparameter in beiden Strängen ergaben (gleiche Leistung der Stränge). Hierbei hat sich zusätzlich noch eine Verringerung des CSB-Wertes im Strang 2 (VorOrt-Modifikation) von 1800 auf 1400 mg/l ergeben, ebenso ist der kationische Bedarf (gelöste anionisch organische Komponenten gemessen als mEq/l 1/1000n Polydiallyldimethylammoniumchlorid-Lösung) sowie der gelöste SiO2-Anteil im Prozesswasser um ca. 25% gesunken. Tendenziell verringerte sich dadurch auch die Ablagerungsneigung anorganischer Komponenten (Beurteilung an eingehängten Metallflächen im Scheibeneindickerfiltrat) sowie die Wechselwirkungen mit kationischen Hilfsmitteln, wodurch sich die Entwässerungsleistungen an den Scheibeneindickern (Verringerung der Drehzahlen) sowie die Retentionen an der PM um je ca. 10% verbesserten.

Gleichzeitig konnte eine bessere Pufferung des Altpapieraufbereitungssystems erkannt werden (höherer m-Wert; Messverfahren nach DIN 38409H7 (Basekapazität K_{B} 4,3)).

Die folgende Tabelle verdeutlicht die Versuchsergebnisse zur Leistungssteigerung:

| Deinkinganlage | Linie 1 | VorOrt-Modifikationen Linie 2 | | Additive | % |
|---|---|---|---|---|---|
| 35% Zeitungen/ 65% Illustrierte | Std >120 Stunden | 1 Stunde | 1 Stunde | H2O2 100% | 0,9 |
| | | | + Polymer 50ppm | NaOH 100% | 0,35 |
| Weiße R457 % | 61,7 | 62,5 | 62,7 | Seife | 0,35 |
| Hellbez. Y % | - | - | - | Wasserglas 1,87 | 1,25 |
| b*-Wert - | 5,2 | 4,4 | - | | |
| Ausbeute % | 82,5 | 83,1 | 83,4 | | |
| Asche % | 15 | 15,9 | 16,6 | | |
| Schmutzpunktfläche mm²/m² | 318 | 256 | 212 | | |
| dY Filtrat | 45 | 31 | 17 | | |
| CSB | 1820 | 1430 | 1320 | | |
| kat. Bedarf µEq/l | 2800 | 2250 | 2190 | | |
| SiO2 mg/l | 165 | 128 | 126 | | |
| m-Alkalität mmol/l | 12.8 | 13,9 | 13,7 | | |

Des Weiteren zeigt die nachfolgende Tabelle die Veränderung des Additiveinsatzes bei annähernder Leistungsgleichheit der beiden Deinkingstränge:

| | Linie 1 | VorOrt-Modifikationen Linie 2 | | | |
|---|---|---|---|---|---|
| Additive % | Std >120 Stunden | 1 Stunde | Einsparung % | 1 Stunde + Polymer 50ppm | Einsparung% |
| **H2O2100%** | **0,9** | **0,7** | **-29** | **0,7** | **-29** |
| **NaOH 100%** | **0,35** | **0,25** | **-40** | **0,25** | **-40** |
| **Seife** | **0,35** | **0,35** | **0** | **0,3** | **-17** |
| **Wasserglas 1,87** | **1,25** | **1,05** | **-19** | **0,95** | **-32** |

Eine weitere Verbesserung um ca. 5% konnte durch eine Abmischung von 1 Stunden-Modifikation mit einer 24h-Modifiktion erreicht werden, die über kurze Zeit getestet wurde. In diesem Beispiel konnte also einerseits eine Leistungssteigerung des Deinkingsystems bei ca. 30%iger Kosteneinsparung für das VorOrt-modifizierte Wasserglas sowie weitergehend durch Polymerzusatz, oder andererseits eine zweifache Kosteneinsparung (Kosteneinsparung durch VorOrt-modifiziertes Wasserglas sowie die Reduzierung von Hilfsmitteln) von ca. 45% bei gleicher Leistung erreicht werden.

### Beispiel 3: Bleiche von TMP-Faserstoff (Labor)

Die Laborversuche wurden an einem thermomechanischen Fertigfaserstoffes aus einer TMP-Faserstoffaufbereitung gemäß der in der Papierindustrie verwendetenBleichstandardmethode durchgeführt. Dazu wurden jeweils 20g einer gut homogenisierten Probe an TMP-Fertigstoff in einem Plastikbeutel auf Temperaturen von 75°C für 15min erhitzt. Anschließend wurde die jeweilige Bleichlösung dem Stoff hinzu gegeben, mit einem Hobartmixer durchmischt und im Plastikbeutel für 80min in einem Wasserbad bei konstant 75°C gehalten. Aus einem Teil des Stoffes wurden 200g/m²-Nutschenblätter erzeugt, um nach dem Trocknen die optischen Eigenschaften zu messen, der andere Teil der 28%igen Stoffsuspension wurde ausgepresst und die wässrige Phase analysiert.

Die Bleichlösung wurde nach folgender Rezeptur bezogen auf Faserstoff zugegeben: H2O2 (100%) 1-2,5 %, NaOH (100%) 0,4%, DTPA-Lösung 0,25%, Wasserglas 1,87 1,0%

Eingesetzt wurde einmal eine herstellerseitig modifizierte Wasserglaslösung sowie VorOrt-Modifikationen verschiedener Reifezeiten und Abmischungen verschiedener VorOrt-Modifikationen. Dabei hat sich in diesem Fall herausgestellt, dass eine Abmischung einer 1-Stunden gereiften mit einer 24h gereiften VorOrt-Variante (in der Tabelle 1h-Mod bzw. 1+24h-Mod genannt) im Verhältnis 2:1 als das Optimum erwies (optimale Wasserstoffperoxidaktivierung bei geringstem Wasserstoffperoxidzerfall).
Die folgende Tabelle zeigt exemplarisch für 2% H2O2 (100%) und 24h-Mod und 1+24h-Mod die über je 3 Versuchsreihen gemittelten Ergebnisse:

| **Nullprobe** | | | |
|---|---|---|---|
| Weiße R457 | 48,6 | | |
| L* | 81,9 | | |
| b* | 13,1 | | |

| **nach Bleiche** | Standard-Mod 1,87 | 24h-Mod 1,87 | 1+24h-Mod 1,87 |
|---|---|---|---|
| Weiße R457 | 57,3 | 57,6 | 58,4 |
| L* | 86 | 86,8 | 87 |
| b* | 12,7 | 12,7 | 12,2 |
| Weißehub | 8,7 | 9 | 9,8 |
| RestH2O2 % | 8,1 | 11,5 | 16,7 |

Dabei zeigt die Abmischung 1+24h-Mod die beste Bleichwirkung mit dem höchsten Weißehub beim geringsten Gelbwert b* und dem höchsten Restperoxid (gemessen über lodometrie). Ergänzenderweise ist anzumerken, dass die Mischung (hier 1:1) aus herstellerseitig modifiziertem Wasserglas und 1h-VorOrt-modifiziertem Wasserglas bei den Untersuchungen ungefähr im Bereich der Ergebnisse der 24h-Modifikationen lagen.

### Beispiel 4: Wasserstoffperoxid-Dispergerbleiche von Altpapier

Gebleicht wurde der Fertigstoff einer Altpapieranlage unter Verwendung der Standardrezeptur, wobei jeweils das herstellerseitig modifizierte Wasserglas durch eine VorOrt-Modifikation ausgetauscht wurde. Die Ergebnisse sind Mittelwerte aus 5 Tagen Versuch und jeweils 2 Tagen vor und 3 Tage nach Versuch:

| **vor Bleiche** | | |
|---|---|---|
| R457 Ausgangswert | 62,12 | 62,36 |
| Helligk. Y Ausgangswert | 66,96 | 67,1 |
| x Ausgangswert | 0,3219 | 0,322 |
| Y Ausgangswert | 0,3249 | 0,3244 |

| **nach Bleiche** | **6h-VorOrt-Mod 1,85** | **Standard 1,85** |
|---|---|---|
| **pH** | 8,9 | 8,9 |
| **Restperoxid, mg/l** | 2244 | 1870 |
| **Weisse R457** | 68,09 | 67,87 |
| **Helligbezug Y** | 72,39 | 72,30 |
| **x** | 0,3191 | 0,3201 |
| **y** | 0,3233 | 0,3241 |
| **Helligkeit** | 5,43 | 5,20 |
| **Weissgrad** | 5,97 | 5,51 |

Folgende Rezeptur kam nach Angaben des Papierherstellers während der Versuchszeit zum Einsatz:

| **Rezeptur %** | |
|---|---|
| H2O2 (100%) | 2 |
| NaOH (100) | 0,45 |
| Wasserglas | 0,85 |
| Komplexbildner | 0,1 |

Die Ergebnisse zeigen hier wieder, dass die, vorab im Labor auf den Anwendungsfall hin optimierte, VorOrt-Modifikation Vorteile gegenüber der gealterten Standard-Modifikation des Herstellers hinsichtlich Weißehub und Helligkeit aufweist. Auch hier konnte eine höhere Helligkeit erzielt werden, so dass neben der grundsätzlichen Einsparung durch VorOrt-Modifikation entweder eine Möglichkeit zur Leistungssteigerung oder zur Reduzierung der Additivmengen und damit weiteren Kostensenkung besteht.

Der Restperoxidgehalt deutet auf eine gesteigerte Komplexierungseigenschaft der Vor-Ort-Modifikationsvariante hin, die etwas geringere Gelbverschiebung auf eine erhöhte pH-Pufferungseigenschaft bei ausreichender freier Alkalinität hin.

Das modifizierte Wasserglas mit geeignet eingestelltem Silikatmodul wird vorzugsweise bereitgestellt für einen Prozeß zur Erhöhung des Weißgrades und des Helligkeitsbezugswertes beim Deinking von Altpapier und der Bleiche von organischen Fasern, zur Herstellung eines Mittels zur Verringerung der Kreislaufbelastung (Anionische Ladungen und CSB-Beladung), mit erhöhtem Schmutzpartikelaustrag, zur Steigerung der Ausbeute (Verringerung der Verluste) im Deinkingprozess, zur Steigerung der Entwässerungsleistung, zur Steigerung der Komplexierung von Metallen und Peroxidstabilisierung, zur Steigerung der Systempufferung (freie und kombinierte Alkalität), zur Verringerung der SiO2-Konzentrationen und Carryover in weiterführende Kreisläufen, zur Verringerung von wasserglasbasierenden Ablagerungen, zur Verringerung der Faservergilbung, zur Kostenverringerung bei Deinking und Faserbleichen sowie allen handelsüblichen Prozessen und Einsätzen von Wassergläsern, zur Reduzierung von Schmutzpunkten und Klebern, und/oder zur beliebigen Einstellung der Q₀-Q_{4/n}-Phasen -Anteile im Wasserglas

## Patentansprüche

1. Verfahren zur Bereitstellung von Wasserglas für eine industrielle Anwendung, bei dem das SiO2/Na2O-Verhältnis des Wasserglases auf einen abhängig vom Anwendungszweck gewählten Sollwert eingestellt wird, indem Standardwasserglas innerhalb eines für den jeweiligen Anwendungszweck vorgegebenen Zeitintervalls von höchstens 360 min vor dem vorgesehenen Einsatzzeitpunkt mit Kalilauge, mit einem Kalium-Wasserglas oder mit Natronlauge als Verdünnungsmittel vermischt wird.

2. Verfahren nach Anspruch 1, bei dem zusätzlich ein Polymer beigemischt wird.

3. Verfahren nach Anspruche 1 oder 2, bei dem für die Einstellung des Silikatmoduls ein Zeitintervall von mindestens 2s vorgegeben wird.

4. Verfahren nach einem der Ansprüche 1 bis 3, bei dem für den Silikatmodul ein Sollwert von mindestens 0,2 und höchstens 3,0 gewählt wird.

5. Verwendung eines nach einem der Ansprüche 1 bis 4 bereitgestellten Wasserglases für einen Deinkingprozess oder zur Bleiche von Fasern oder Faserstoffen.

## Claims

1. Method for preparing water glass for an industrial application, wherein the SiO₂/Na₂O-ratio of the water glass is set to a target value selected on the basis of the intended use, by mixing standard water glass with a caustic potash solution, with a potassium-water glass or with sodium-hydroxide solution as the diluent within a time interval, predefined for the particular intended use, of at most 360 minutes before the planned time of use.

2. Method according to claim 1, wherein a polymer is additionally admixed.

3. Method according to either claim 1 or claim 2, wherein a time interval of at least 2 seconds is predefined for setting the silica modulus.

4. Method according to any of claims 1 to 3, wherein a target value of at least 0.2 and at most 3.0 is selected for the silica modulus.

5. Use of a water glass prepared according to any of claims 1 to 4 for a de-inking process or for bleaching fibres or fibrous materials.

## Revendications

1. Procédé de préparation de verre soluble pour une utilisation industrielle, dans lequel le rapport SiO₂/Na₂O du verre soluble est réglé à une valeur de consigne choisie en fonction de l'utilisation prévue en mélangeant, à l'intérieur d'un intervalle de temps prédéfini pour l'utilisation prévue respective de 360 min. maximum avant le moment d'utilisation prévu, du verre soluble standard avec de la lessive de potasse caustique, avec un verre soluble au potassium ou avec de la lessive de soude caustique en tant que diluant.

2. Procédé selon la revendication 1, dans lequel un polymère est ajouté à titre supplémentaire.

3. Procédé selon la revendication 1 ou 2, dans lequel un intervalle de temps d'au moins 2 s est prédéfini pour le réglage du module de silicate.

4. Procédé selon l'une des revendications 1 à 3, dans lequel une valeur de consigne d'au moins 0,2 et de 3,0 au maximum est choisie pour le module de silicate.

5. Utilisation d'un verre soluble préparé selon l'une des revendications 1 à 4 pour un processus de désencrage ou pour le blanchiment de fibres ou de matières fibreuses.
